# EUROPEAN PATENT APPLICATION

(11) **EP 4 726 868 A1**
(43) Date of publication of application: **15.04.2026**
(21) Application number: 25206261.7
(22) Date of filing: 02.10.2025
(51) Int. Cl.: H01M 50/107, H01M 50/152, H01M 50/167, H01M 50/184, H01M 50/186, H01M 50/342

(54) **POWER STORAGE DEVICE**

(30) Priority: 10.10.2024 JP 2024178457
(71) Applicant: TOYOTA JIDOSHA KABUSHIKI KAISHA, Toyota-shi, Aichi-ken 471-8571 (JP)
(72) Inventor: IDESHIO, Yukihiko, Toyota-shi, 471-8571 (JP); MATSUSHITA, Taro, Toyota-shi, 471-8571 (JP); KIMURA, Kenta, Toyota-shi, 471-8571 (JP); KOSHIKAWA, Tomoaki, Toyota-shi, 471-8571 (JP)
(74) Representative: TBK

(57) **Abstract**

A power storage device includes: a cylinder-shaped casing that houses an electrode assembly inside and has a central axis extending along a first direction; a safety valve arranged so as to overlap with the central axis when viewed along the first direction; a lid fixed at the casing by a crimped section crimping the casing from a first side in the first direction of the casing, wherein the lid includes a ring-shaped partition wall extending toward the first side and provided further to a radial direction outer side than the safety valve and further to a radial direction inner side than the crimped section; and a seal member that seals the crimped section at the radial direction outer side of the partition wall, the seal member being arranged at a second side in the first direction of the casing than an end portion of the casing at the first side.

## Description

### BACKGROUND

### Technical Field

The present disclosure relates to a power storage device.

### Related Art

Japanese Patent Application Laid-Open (JP-A) No. 2002-008602 discloses a structure to improve the sealing properties at a crimped fixing portion of a cylinder-shaped power storage cell by filling a gap between an electrode lid and a battery case with a sealant.

However in a case in which, for example, a sealant is provided in close proximity to a safety valve in a power storage cell equipped with a safety valve, there is a concern that valve-opening of the safety valve might be impeded depending how the seal member has actually been filled.

### SUMMARY

In consideration of the above circumstances, the present disclosure provides a power storage device capable of preventing valve-opening of a safety valve from being impeded.

A power storage device according to a first aspect of the present disclosure includes a cylinder-shaped casing that houses an electrode assembly inside and has a central axis extending along a first direction; a safety valve arranged so as to overlap with the central axis when viewed along the first direction; a lid fixed at the casing by a crimped section crimping the casing from a first side in the first direction of the casing, wherein the lid includes a ring-shaped partition wall extending toward the first side and provided further to a radial direction outer side than the safety valve and further to a radial direction inner side than the crimped section; and a seal member that seals the crimped section at the radial direction outer side of the partition wall, the seal member being arranged at a second side in the first direction of the casing than an end portion of the casing at the first side.

The power storage device according to the first aspect includes the ring-shaped partition wall extending toward the first side and provided further to the radial direction outer side than the safety valve and further to the radial direction inner side than the crimped section, and includes the seal member that seals the crimped section at the radial direction outer side of the partition wall, the seal member being arranged at a second side of the casing than the end portion of the casing at the first side. Therefore, movement of the seal member toward the safety valve side is prevented by the partition wall provided in the radial direction between the seal member and the safety valve, thereby enabling valve-opening of the safety valve to be prevented from being impeded.

A second aspect of the present disclosure is a power storage device according to the first aspect, wherein the lid includes a ring-shaped recess that is arranged separated in a radial direction from the safety valve as viewed along the first direction and that is open at the first side in the first direction ; and the partition wall is configured by an inner wall at a radial direction inner side of the recess..

The power storage device according to the second aspect includes the ring-shaped recess that is arranged separated in the radial direction from the safety valve as viewed along the first direction and is open at the first side in the first direction. Therefore, movement of the seal member toward the safety valve side is prevented by the recess, enabling valve-opening of the safety valve to be prevented from being impeded.

A a third aspect of the present disclosure is a power storage device according to any of the above aspects, wherein, when viewed along the direction perpendicular to the first direction, an end portion of the crimped section at a radial direction outer side is distal from the lid than an end portion of the crimped section at a radial direction inner side.

In the power storage device according to the third aspect, the end portion of the crimped section at the radial direction outer side is distal from the lid than an end portion of the crimped section at the radial direction inner side, thereby enabling a drop in sealing properties of the crimped section caused by movement of the seal member toward the radial direction outside to be prevented from occurring.

A fourth aspect of the present disclosure is a power storage device according to the third aspect wherein, when viewed along the direction perpendicular to the first direction, the crimped section is distal from the lid on progression from the end portion at the radial direction inner side toward the end portion at the radial direction outer side.

In the power storage device according to the fourth aspect, the crimped section is distal from the lid on progression from the end portion at the radial direction inner side toward the end portion the radial direction outer side, thereby facilitating movement of the seal member from the radial direction outside toward the radial direction inside. This thereby enables a drop in sealing properties of the crimped section caused by movement of the seal member toward the radial direction outer side to be better prevented from occurring.

A fifth aspect of the present disclosure is a power storage device according to any of the above aspects, wherein the lid includes a slope inclined in a direction separating away from the casing on progression from a peripheral edge of the lid toward the partition wall in a radial direction.

In the power storage device according to the fifth aspect, the lid includes the slope inclined in a direction separating away from the casing on progression from the peripheral edge toward the partition wall in a radial direction, thereby facilitating movement of the seal member along the slope, and making it easier for the seal member to accumulate at the crimped section side. This thereby enables a drop in sealing properties at the crimped section to be better prevented from occurring.

A sixth aspect of the present disclosure is power storage device according to any of the above aspects, wherein the casing includes a ring-shaped second partition wall that extends from the crimped section toward the first side; and the seal member is arranged further toward the second side than an end portion of the second partition wall at the first side. [claim 6]

In the power storage device according to the sixth aspect, the casing includes the ring-shaped second partition wall that extends from the crimped section toward the first side, and the seal member is arranged further toward the second side than an end portion of the second partition wall at the first side, thereby enabling movement of the seal member further to the outer side than the crimped section to be prevented by the second partition wall.

A seventh aspect of the present disclosure is a power storage device according the sixth aspect further including a third partition wall provided at the end portion of the second partition wall at the first side and extending toward the radial direction inner side, wherein the seal member is arranged further to the second side than the third partition wall.

The power storage device according to the seventh aspect includes the third partition wall provided at the end portion of the second partition wall at the first side and extending toward the radial direction inner side, and the seal member is arranged further to the second side than the third partition wall, thereby enabling movement of the seal member toward the first side to be prevented by the third partition wall.

An eight aspect of the present disclosure is a power storage device according any of the above aspects, further including a fourth partition wall provided at the end portion of the partition wall at the first side and extending toward the radial direction outer side, wherein the seal member is arranged further to the second side than the fourth partition wall.

The power storage device according to the eighth aspect includes the fourth partition wall provided at the end portion of the partition wall at the first side and extending toward the radial direction outer side, and the seal member is arranged further to the second side than the fourth partition wall, thereby enabling movement of the seal member toward the safety valve side to be better prevented by the fourth partition wall.

A ninth aspect of the present disclosure is a power storage device according to the seventh aspect or the eighth aspect, wherein the third partition wall and the fourth partition wall are positioned displaced from each other in the first direction, with portions of the third partition wall and the fourth partition wall overlapping with each other when viewed along the first direction.

In the power storage device according to the ninth aspect, the third partition wall and the fourth partition wall are positioned displaced from each other in the first direction, with portions of the third partition wall and the fourth partition wall overlapping with each other when viewed along the first direction, thereby enabling movement of the seal member toward the first side to be prevented by the third partition wall and the fourth partition wall.

A tenth aspect of the present disclosure is a power storage device according the seventh aspect or the eighth aspect, wherein the third partition wall and the fourth partition wall are joined together at radial direction end portions thereof when viewed along the first direction.

In the power storage device according to the tenth aspect, the third partition wall and the fourth partition wall are joined together at radial direction end portions when viewed along the first direction, thereby enabling movement of the seal member toward the first side to be better prevented by the third partition wall and the fourth partition wall.

As described above, the power storage device according to the present disclosure enables valve-opening of the safety valve to be prevented from being impeded.

### BRIEF DESCRIPTION OF THE DRAWINGS

Exemplary embodiments of the present disclosure will be described in detail based on the following figures, wherein:
Fig. 1 is a schematic cross-section illustrating an example of a power storage device according to a first exemplary embodiment of the present disclosure;
Fig. 2 is an enlarged cross-section illustrating an enlargement of inside broken line box A of the power storage device of Fig. 1;
Fig. 3 is an enlarged cross-section illustrating an enlargement of inside broken line circle C of the power storage device of Fig. 2;
Fig. 4 is a schematic top view of the power storage device of Fig. 1 as viewed from a lid side;
Fig. 5 corresponds to Fig. 3 and is an enlarged cross-section illustrating a modified example of a power storage device according to the first exemplary embodiment;
Fig. 6 corresponds to Fig. 2 and is an enlarged cross-section of a power storage device according to a second exemplary embodiment of the present disclosure;
Fig. 7 is an enlarged cross-section illustrating an enlargement of inside broken line circle C of the power storage device in Fig. 6;
Fig. 8 is a schematic top view of the power storage device of Fig. 6 as viewed from a lid side;
Fig. 9 corresponds to Fig. 2 and is an enlarged cross-section of a power storage device according to a third exemplary embodiment of the present disclosure;
Fig. 10 is an enlarged cross-section illustrating an enlargement of inside broken line circle C of the power storage device in Fig. 9;
Fig. 11 is a schematic top view of the power storage device of Fig. 9 as viewed from a lid side;
Fig. 12 corresponds to Fig. 2 and is an enlarged cross-section of a power storage device according to a fourth exemplary embodiment of the present disclosure;
Fig. 13 is an enlarged cross-section illustrating an enlargement of inside broken line circle C of the power storage device in Fig. 12;
Fig. 14 is a schematic top view of the power storage device of Fig. 12 as viewed from a lid side;
Fig. 15 corresponds to Fig. 13 and is an enlarged cross-section of a modified example of a power storage device according to the fourth exemplary embodiment; and
Fig. 16 is an enlarged cross-section of a power storage device not provided with an outer wall.

### DETAILED DESCRIPTION

Description follows regarding exemplary embodiments for implementing the present disclosure, with reference to the drawings. Note that the following schematically indicates a relevant range needed to describe the present disclosure, and mainly describes a range needed to describe relevant sections of the present disclosure, with existing technology not described. Moreover, the same or similar reference numerals will be appended across the drawings to the same or equivalent configuration members, and duplicate description thereof will be omitted. Furthermore, in order to facilitate reading of the drawings, when the drawings include plural of the same or equivalent individual members, sometimes reference numeral will only be appended to some thereof.

### First Exemplary Embodiment

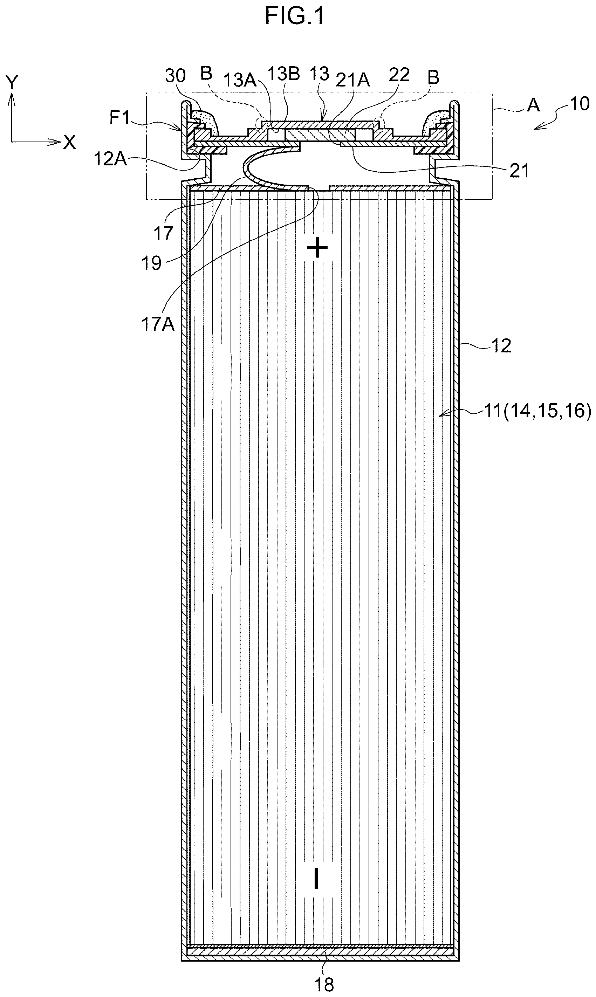

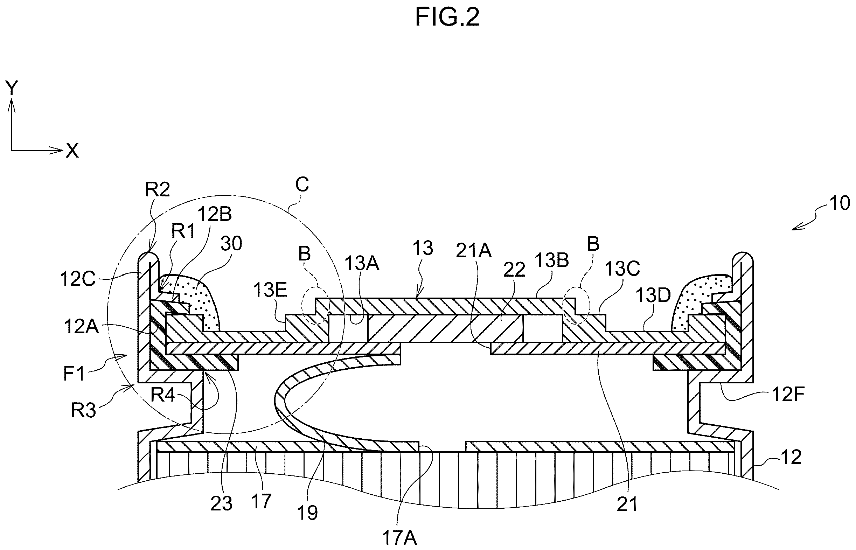

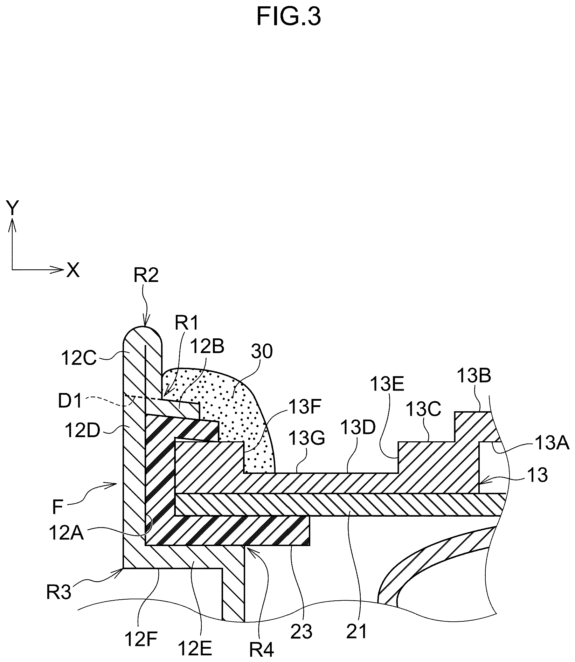

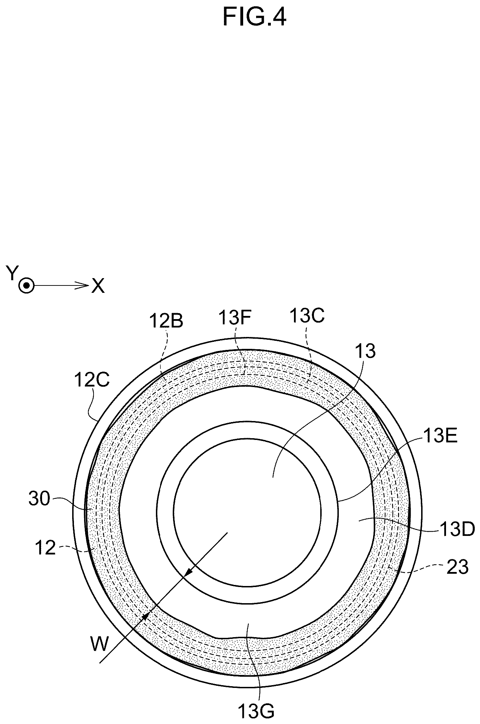

Fig. 1 is a schematic cross-section schematically illustrating an example of a power storage device 10 according to a first exemplary embodiment of the present disclosure, and Fig. 2 is an enlarged cross-section illustrating an enlargement of inside broken line box A of the power storage device 10 in Fig. 1. Moreover, Fig. 3 is an enlarged cross-section illustrating an enlargement of inside broken line circle C of the power storage device 10 in Fig. 2, and Fig. 4 is a schematic top view of the power storage device 10 of Fig. 1 as viewed from a lid 13 side. The power storage device 10 according to the first exemplary embodiment is, for example as illustrated in Fig. 1, configured by a cylindrical battery that may employed in an electric bicycle, an electric car, or the like. Note that in the following description, the arrow X direction in Fig. 1 is may be referred to as being a width direction or a lateral direction, and the arrow Y direction (axial direction) is may be referred to as being vertical direction or a height direction. Note that the arrow Y direction in the present exemplary embodiment corresponds to a first direction, with the plus side in the arrow Y direction corresponding to a one-end side (first side), and the minus side thereof corresponding to an other-end side (second side). Note that for ease of explanation the plus side in the arrow Y direction will be described as being an upper side, and the minus side thereof will be described as being a lower side.

The power storage device 10 according to the present exemplary embodiment may be configured by a battery including an electrolyte solution such in a lithium-ion battery. As illustrated in Fig. 1 and Fig. 2, the power storage device 10 includes at least an electrode assembly 11, a battery case 12 housing the electrode assembly 11 together with the electrolyte solution, and a lid 13 that at least partially closes off an opening of the battery case 12. Note that although the present exemplary embodiment illustrates an embodiment of the power storage device 10 including an electrolyte solution, the power storage device 10 may not necessarily include a liquid inside the battery case 12.

The electrode assembly 11 may, for example, be configured by a wound-cylinder type of power storage cell. The electrode assembly 11 may include a strip-shaped cathode 14 and anode 15, and have a wound structure with a separator 16 of similar strip-shape in an interposed state therebetween. The cathode 14 may formed of a metal, such as cobalt, nickel, manganese, or an iron phosphate-based material, employed either singly or as a combination thereof. Moreover, a carbon-based material or another alloy may be used as the anode 15. Furthermore, a porous sheet having both ion-permeability and insulating properties may be used as the separator 16. Examples of materials that may be used for the porous sheet include a polyolefin resin such as polyethylene or polypropylene, cellulose, or the like.

The electrolyte solution encapsulated in the power storage device 10 may be an organic solvent, such as an ethylene carbonate, dimethyl carbonate, diethyl carbonate, or the like, with a lithium electrolyte salt dissolved therein. Note that the material and shape of each of the configuration elements configuring the electrode assembly 11, the type of the electrolyte solution, and the like may be appropriately selected and employed based on such factors as the usage application of the power storage device 10.

An upper insulation plate 17 and a lower insulation plate 18 are provided at the top and bottom of the electrode assembly 11. As illustrated in Fig. 1 and Fig. 2, a cathode lead 19 having a one-end electrically connected to a winding direction intermediate portion of the cathode 14 is provided to the upper insulation plate 17. Note that a through hole 17A for insertion of the cathode lead 19 is provided in the upper insulation plate 17. Another-end of the cathode lead 19 is electrically connectable to a terminal plate 21, described later.

The battery case 12 is, for example, formed into a cylindrical shape having a central axis along the Y direction, and may be configured by an outer can formed from a metal container having a bottomed cylindrical shape. An opening 12A is provided to an upper portion of the battery case 12, with the opening 12A being closed off by the lid 13 after insertion of the electrode assembly 11 and the electrolyte solution into the battery case 12. The battery case 12 is able to function as an anode terminal electrically connected to the anode 15 by connection of a non-illustrated anode lead electrically connected to an end portion of the wound anode 15, or to an appropriate location on the anode 15. The battery case 12 may be manufactured by being formed into a bottomed cylindrical shape by performing drawing process or the like on a metal plate.

The lid 13 may be configured by a closure member that closes off the opening 12A of the battery case 12. The lid 13 of the present exemplary embodiment is provided with a housing section 13A housing a safety valve 22, described later, with the housing section 13A formed around a central axis so as to configure a circular shaped indentation on the lower side of the lid 13. The lid 13 is formed with a substantially circular shape as viewed along the height direction and, as illustrated in Fig. 2, includes a central section 13B where the housing section 13A is formed, and an outer peripheral portion 13C that extends around the outer periphery of the central section 13B and has an upper face positioned one step lower than the central section 13B. A ring-shaped recess 13D, described later, is provided in the outer peripheral portion 13C.

The lid 13 also includes, for example at an axial direction lower face thereof, a terminal plate 21 where the other-end of the cathode lead 19 is attached by welding or the like. The safety valve 22 is arranged inside the housing section 13A of the lid 13, and concentric to the lid 13. Note that the safety valve 22 is arranged so as to oppose the terminal plate 21, with an insulation plate (not illustrated in the drawings) arranged between the terminal plate 21 and the safety valve 22.

The terminal plate 21 may be configured by a substantially circular plate shaped member formed from a metal, for example from stainless steel (SUS), aluminum, or an aluminum alloy. An outer peripheral portion of the safety valve 22 is joined, by welding or by bonding using an adhesive or the like, to the upper face side of an outer peripheral portion of a central hole 21A provided in the center of the terminal plate 21. Plural non-illustrated air holes used for releasing pressure are provided on the lid 13 at positions a specific distance in the radial direction away from the safety valve 22, for example inside the broken line circle B. For example, in the present exemplary embodiment the plural air holes are provided in the outer peripheral face of the central section 13B of the lid 13.

The safety valve 22 is configured by a substantially circular plate shaped member having a larger diameter than the central hole 21A of the terminal plate 21, and a smaller diameter than the inner peripheral face of the housing section 13A. The safety valve 22 is arranged such that the central axis of the safety valve 22 is aligned with the central axis of the lid 13. The safety valve 22 may be manufactured by pressing a plate member made from a metal, such as stainless steel (SUS), aluminum, or an aluminum alloy. Adopting stainless steel, aluminum, an aluminum alloy, or the like as the material for the safety valve 22 enables a common material to be used to that of the terminal plate 21, and also facilitates joining the safety valve 22 and the terminal plate 21 together, such as by welding. A known valve structure that inverts when the pressure inside the battery case 12 rises, due to being pressed by such pressure, may be adopted for the safety valve 22, with damage to the battery case 12 being prevented by the safety valve 22.

In the power storage device 10, an edge portion of the lid 13 having the configuration described above is sealed by being crimp-fixed to the opening 12A by a crimped section F (F1). Description follows regarding an example of a structure of the crimped section F.

As illustrated in Fig. 2 and Fig. 3, the crimped section F is formed in a ring shape to an axial direction (height direction) one-end portion of the power storage device 10, more specifically to the opening 12A portion of the battery case 12, and crimp-fixes an outer peripheral portion of the lid 13 including the terminal plate 21, with a gasket 23 interposed therebetween. The crimped section F is, for example, configured by a leading end 12B at the first side in an axial direction of the battery case 12 being bent at a position indicated by arrow R1, and by a position of arrow R2 further toward the second side than the position indicated by arrow R1 being bent over such that the battery case 12 is superimposed on itself. Then the crimped section F is bent into a shape so as to surround the outer peripheral portion 13D of the lid 13 including the terminal plate 21 by being bent at a position of arrow R3 even further toward the second side than the position indicated by arrow R2, and by being bent at a position of arrow R4 even further toward the second side than the position indicated by arrow R3. The crimped section F is obtained by, after the end portion of the battery case 12 has been bent, clamping and crimping from above and below using a non-illustrated pressing device.

In the present exemplary embodiment, a portion of the battery case 12 at the first side (upper side) than the dashed line D1 (i.e., an imaginary line extending the upper face of the leading end 12B toward the radial direction outer side) where the casing of the battery case 12 is superimposed on itself configures an outer wall 12C serving as a second partition wall. A portion of the battery case 12 extending downwards from the outer wall 12C configures an upper outer peripheral portion 12D, and a portion of the battery case 12 extending further toward the radial direction inside from the lower end of the upper outer peripheral portion 12D configures a bottom 12E. The crimped section F is, for example, obtained by clamping and crimping portions further to the second (lower) side than the outer wall 12C, i.e. the leading end 12B and the bottom 12E, from above and below using a non-illustrated pressing device. Namely, due to the radial direction inner side of the upper side of the gasket 23, and the radial direction inner side of the leading end 12B of the battery case 12, being pressed downward, these radial direction inner side are positioned further toward the axial direction lower side than the radial direction outer sides thereof.

When viewing the crimped section F from a direction (X direction) perpendicular to the height direction (axial direction), an upper end of the outer wall 12C, which is an end portion at the radial direction outer side of the battery case 12, is separated (distal) from the lid 13 than the upper face at the radial direction inner side of the leading end 12B, which is an end portion at the radial direction inner side of the battery case 12. In other words, the upper end of the outer wall 12C, which is the end portion at the radial direction outer side of the battery case 12, is positioned further to the first side (upper side) than the radial direction inside upper face of the leading end 12B, which is the end portion at the radial direction inner side of the battery case 12.

Moreover, when looking from a direction (X direction) perpendicular to the height direction (axial direction), in the crimped section F of the present exemplary embodiment, the upper face of the end portion of the leading end 12B at the radial direction inner side separates (is distal) from the lid 13 toward the upper end of the end portion of the leading end 12B at the radial direction outer side. In other words, the upper face of the leading end 12B forms a sloping face inclined downward from the radial direction outer side toward the radial direction inner side.

The gasket 23 functions as a seal member to maintain the airtightness of the power storage device 10. In addition thereto, the gasket 23 also has a function to electrically insulate between the battery case 12 and the terminal plate 21. This means that the gasket 23 may be configured from a relatively soft insulating material, such as a synthetic resin.

As illustrated in Fig. 2, a ring-shaped recess 12F indented toward the inner peripheral side of the battery case 12 is formed around the entire periphery of the battery case 12 between, in the height direction of the battery case 12, the opening 12A and a housing position of the upper insulation plate 17. The ring-shaped recess 12F supports the electrode assembly 11 and the like that are housed inside the battery case 12 by support inside the battery case 12. In addition, an upper face of the ring-shaped recess 12F functions as a placement face, where an outer peripheral portion of the terminal plate 21 of the lid 13 is placed with the gasket 23 interposed therebetween.

As stated above, the opening 12A of the battery case 12 is bent so as to surround a lower face of the outer peripheral portion of the terminal plate 21 of the lid 13 placed on the upper face of the ring-shaped recess 12F, to surround the side face of the lid 13 including the terminal plate 21, and to surround an upper face of the lid 13, in a state in which the gasket 23 is interposed therebetween. This means that, as illustrated in Fig. 2 and Fig. 3, the gasket 23 and the lid 13 are crimp-fixed at the inside of the opening 12A by being pressed from above and below using a non-illustrated pressing device. The crimped section F also, due to the gasket 23 being interposed between the battery case 12 and the lid 13, realizes insulation of the lid 13 from the battery case 12 while securing airtightness of this portion.

In a power storage device 10 including the configuration described above, sometimes there is, for example, a slight leak of liquid that occurs due a rise in pressure inside the battery case 12, or caused by an external shock. Moreover, most of such leaking liquid is generated at the periphery of the crimped section F. A seal member 30 is accordingly disposed in the power storage device 10 to seal the crimped section F. The seal member 30 is, for example, configured from a resin member, such as a synthetic resin, with a hard resin or the like employed therefor. As illustrated in Fig. 2 and Fig. 3, the seal member 30 is arranged so as to cover upper faces of the leading end 12B of the battery case 12, the gasket 23, and the lid 13. In the present exemplary embodiment, the upper face of the seal member 30 is arranged further to the second side (lower side) than the end portion (position indicated by arrow R2) of the outer wall 12C at the first side (upper side).

In a case in which, for example, a seal member has been provided in the vicinity of the safety valve 22 in a power storage device 10 equipped with the safety valve 22 as described above, then there is a concern that the valve-opening of the safety valve 22 might be impeded depending how the seal member has actually been filled. Thus, in the power storage device 10 of the present exemplary embodiment, the lid 13 is equipped with the ring-shaped recess 13D open to the first side (upper side) in the height direction at the peripheral edge of the lid 13 and separated from the safety valve 22 when viewed along the height direction, as illustrated in Fig. 2 and Fig. 3. For example, the recess 13D is provided to the outer peripheral portion 13C of the lid 13 in the present exemplary embodiment. As illustrated in Fig. 3, the recess 13D includes an inner wall 13E at the radial direction inside, an outer wall 13F at the radial direction outside, and a bottom wall 13G, with the inner wall 13E corresponding to a partition wall.

As illustrated in Fig. 3 and Fig. 4, the seal member 30 illustrated by the dotted-shading region seals the radial direction outer side of the outer peripheral portion 13C of the lid 13 including the upper face of part of the bottom wall 13G at the outer wall 13F side of the recess 13D, seals the gasket 23, and seals the leading end 12B. Note that the seal member 30 is arranged so as to seal at least abutting portions of the leading end 12B and the outer peripheral portion 13C of the lid 13 with the gasket 23 interposed therebetween.

Next, description follows regarding the operation and effects of the power storage device 10 of the first exemplary embodiment.

In the power storage device 10 according to the first exemplary embodiment, the lid 13 includes the recess 13D at a peripheral portion separated away toward the radial direction outer side of the safety valve 22, namely separated from the safety valve 22 when viewed from the height direction. The recess 13D includes the inner wall 13E being provided at the radial direction inner side than the crimped section F and serving as a ring-shaped partition wall extending to the first side. The power storage device 10 also includes the seal member 30 for sealing the crimped section F, arranged at the radial direction outer side of the inner wall 13E, and at the second side than the end portion of the battery case 12 at the first side. Therefore, the crimped section F requiring better sealing properties in the power storage device 10 can be sealed by the seal member 30. Furthermore, due to the inner wall 13E being provided between the seal member 30 and the safety valve 22 in the radial direction, movement of the seal member 30 toward the safety valve 22 side is prevented, enabling the plural air holes provided at the outer peripheral face of the central section 13B of the lid 13 to be prevented from being closed off by the seal member 30, and enabling valve-opening of the safety valve 22 to be prevented from being impeded.

Moreover, in the power storage device 10 according to the first exemplary embodiment, the seal member 30 can be prevented from adhering to a cathode bus bar, which is not illustrated, enabling bus bar welding to the cathode bus bar to be prevented from being impeded.

Moreover, in the power storage device 10 according to the first exemplary embodiment, when the crimped section F is viewed from a direction (X direction) perpendicular to the height direction (axial direction), the upper end of the outer wall 12C, which is the end portion of the battery case 12 at the radial direction outer side, is distal from the lid 13 than the upper face of the leading end 12B at the radial direction inner side, which is the end portion of the battery case 12 at the radial direction inner side. In other words, the upper end of the outer wall 12C, which is the end portion at the radial direction outer side, is positioned further to the first side (upper side) than the upper face of the leading end 12B at the radial direction inner side, which is the end portion at the radial direction inner side. This accordingly enables a drop in the sealing properties of the crimped section F caused by movement of the seal member 30 toward the radial direction outside to be prevented from occurring.

Moreover, in the power storage device 10 according to the first exemplary embodiment, when the crimped section F is viewed from a direction (X direction) perpendicular to the height direction (axial direction), the upper face of the leading end 12B that is the end portion of the leading end 12B at the radial direction inner side is distal from the lid 13 on progression toward the upper end, which is the end portion at the radial direction outer side. In other words, the upper face of the leading end 12B includes the sloping face inclined downward on progression from the radial direction outer side toward the radial direction inner side. This accordingly makes the seal member 30 tends to move from the radial direction outer side toward the radial direction inner side at the upper face of the leading end 12B, enabling a drop in the sealing properties of the crimped section due to movement of the seal member toward the radial direction outer side to be better prevented from occurring.

Moreover, in the power storage device 10 according to the first exemplary embodiment, the battery case 12 includes the ring-shaped outer wall 12C extending from the crimped section F toward the first side, and the seal member 30 is disposed further toward the second side (lower side) than the outer wall 12C. This accordingly enables movement of the seal member 30 further to the outer side than the crimped section F to be prevented by the outer wall 12C.

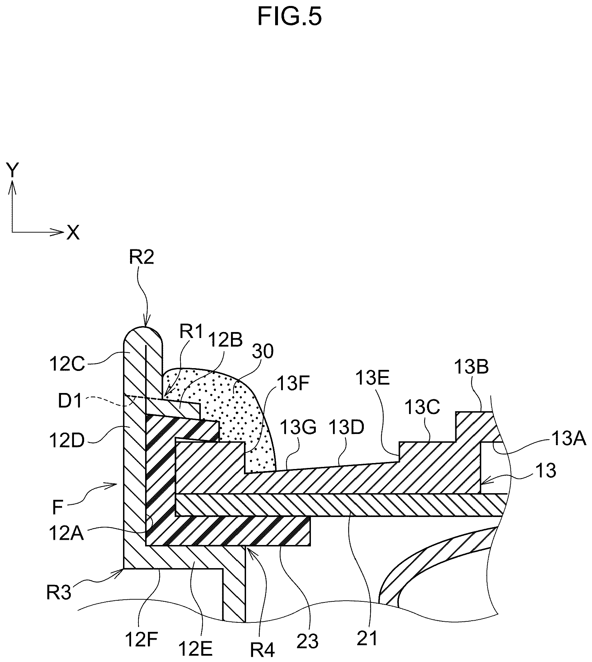

Note that although the power storage device 10 of the first exemplary embodiment described above includes the bottom wall 13G of the recess 13D of the lid 13 formed so as to be flat, the present disclosure is not limited thereto. Fig. 5 is an enlarged cross-section illustrating a modified example of the power storage device 10 according to the first exemplary embodiment, corresponding to Fig. 3. As illustrated in Fig. 5, in the modified example a lid 13 includes a slope inclined in a direction separating away from an electrode assembly 11 on progression from an outer wall 13F positioned at a radial direction peripheral edge toward an inner wall 13E, corresponding to a partition wall. More specifically, the bottom wall 13G of the recess 13D of the lid 13 includes a sloping face inclined upward from the radial direction outer side toward the radial direction inner side.

Therefore, in the modified example, since the lid 13 includes a slope inclined in a direction separating away from the electrode assembly 11 from the outer wall 13F toward the inner wall 13E in the radial direction, the seal member 30 tends to move along the slope, and making it easier for the seal member 30 to accumulate on the crimped section F side. This thereby enables a drop in the sealing properties of the crimped section F to be even better prevented from occurring.

### Second Exemplary Embodiment

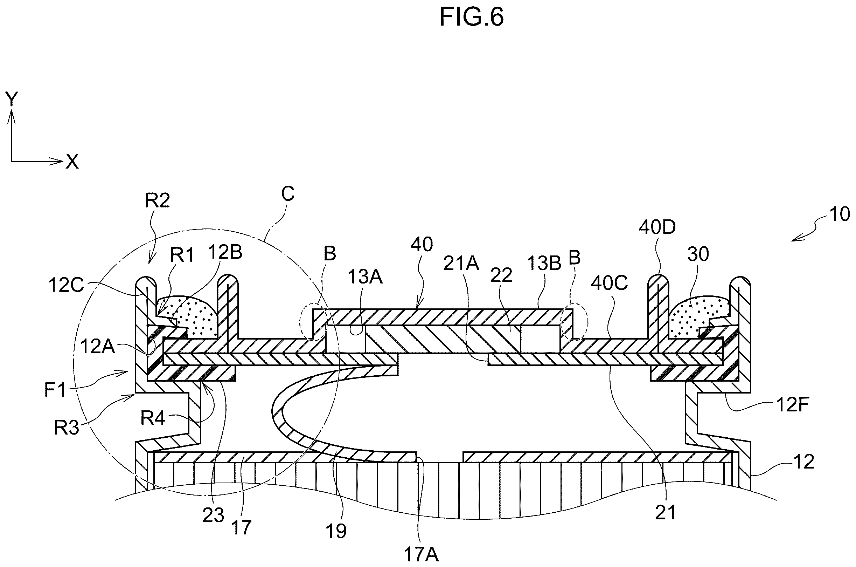

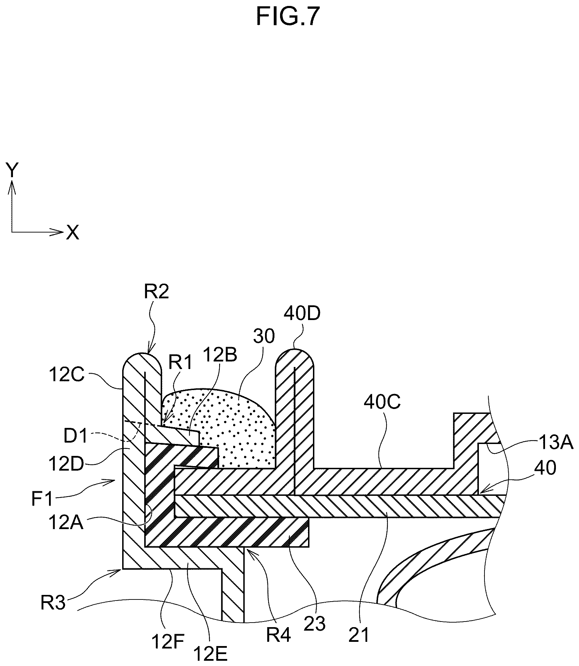

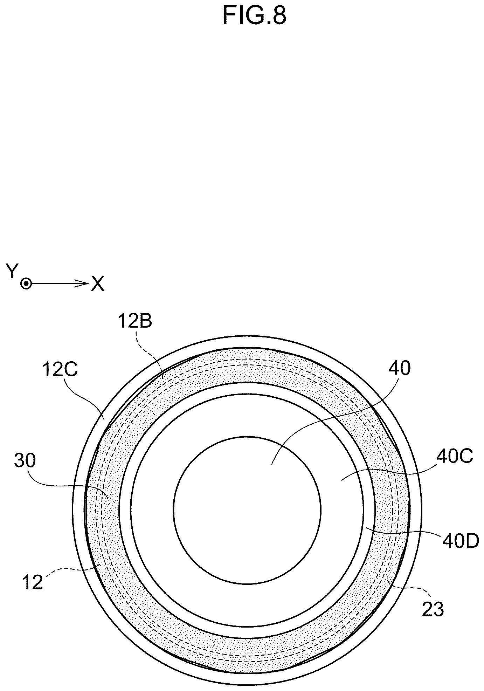

In the power storage device 10 of the first exemplary embodiment the ring-shaped recess 13D is provided to the outer peripheral portion 13C of the lid 13. A power storage device 10A of a second exemplary embodiment does not include a ring-shaped recess 13D in a lid 40, but is provided with a partition wall 40D. Fig. 6 is an enlarged cross-section of the power storage device 10A according to the second exemplary embodiment of the present disclosure, corresponding to Fig. 2. Fig. 7 is an enlarged cross-section illustrating an enlargement of inside broken line circle C of the power storage device 10A in Fig. 6, and Fig. 8 is a schematic top view of the power storage device 10A of Fig. 6 as viewed from a lid 40 side. Note that the same reference numerals are appended in Fig. 6 to Fig. 8 to the configuration similar to that of the power storage device 10 of the first exemplary embodiment, and explanation thereof will be omitted.

Although the power storage device 10 of the first exemplary embodiment includes the ring-shaped recess 13D provided at the outer peripheral portion 13C of the lid 13, the power storage device 10A of the present exemplary embodiment does not include a ring-shaped recess 13D in the lid 40, as illustrated in Fig. 6 and Fig. 7. Therefore, an outer peripheral portion 40C of the lid 40 is formed with a thinner thickness than the outer peripheral portion 13C of the first exemplary embodiment.

As illustrated in Fig. 7, the lid 40 includes the ring-shaped partition wall 40D slightly outer side from the radial center of the outer peripheral portion 40C. In other words, the partition wall 40D is provided at a peripheral edge at a position away from the safety valve 22 at the radial direction outer side thereof, namely at a position separated from the safety valve 22 when viewed along the height direction. The partition wall 40D is provided at the radial direction inner side than the crimped section F, and extends toward the first side (upper side). The partition wall 40D is, for example, formed by bending a casing of the lid 40 so as to be superimposed on itself. The present exemplary embodiment is, for example, formed such that an end portion of the partition wall 40D at the first side (upper side), and an end portion of the outer wall 12C at the first side (upper side) are at substantially the same height as each other. Moreover, the partition wall 40D is formed at a position substantially overlapping with an end portion of the gasket 23 at the radial direction inner side and at the second side (lower side), when viewed from above. The partition wall 40D is formed at a position separated from a leading end 12B of the battery case 12 and an end portion of the gasket 23 at the radial direction inner side and at the first side (upper side).

In the present exemplary embodiment, the seal member 30 is, as illustrated in Fig. 7, disposed between a radial direction inner face of the outer wall 12C, and a radial direction outer face of the partition wall 40D. The seal member 30 is disposed further toward the second side (lower side) than the end portions of the partition wall 40D and the outer wall 12C at the first side (upper side).

As illustrated in Fig. 8, the seal member 30 indicated by the dotted-shading region seals the upper face of the lid 40 further to the radial direction outer side than the partition wall 40D, which is at the radial direction outer side of the outer peripheral portion 40C of the lid 40, seals the gasket 23, and seals the leading end 12B further to the radial direction inner side than the outer wall 12C. The seal member 30 is arranged so as to at least seal abutting portions of the leading end 12B and the outer peripheral portion 40C of the lid 40 with the gasket 23 interposed therebetween.

Next, description follows regarding the operation and effects of the power storage device 10A of the second exemplary embodiment.

The power storage device 10A according to the second exemplary embodiment includes the ring-shaped partition wall 40D and the seal member 30. The ring-shaped partition wall 40D is extending toward the first side (upper side) at a position separated away from the safety valve 22 toward the radial direction outer side and is provided at the radial direction inner side than the crimped section F. The seal member 30 is for sealing the crimped section F and is arranged at the radial direction outer side of the partition wall 40D and further to the second side than the end portions of the partition wall 40D and the battery case 12at the first side. Therefore, in the power storage device 10A, the crimped section F requiring better sealing properties can be sealed by the seal member 30. Furthermore, movement of the seal member 30 in the radial direction toward the safety valve 22 side is prevented by the partition wall 40D provided between the seal member 30 and the safety valve 22, enabling the plural air holes provided at the outer peripheral face of the central section 13B of the lid 40 to be prevented from being closed off by the seal member 30, and enabling valve-opening of the safety valve 22 to be prevented from being impeded.

In addition to the above, the power storage device 10A according to the second exemplary embodiment is also able to obtain similar effects to those of the power storage device 10 of the first exemplary embodiment.

### Third Exemplary Embodiment

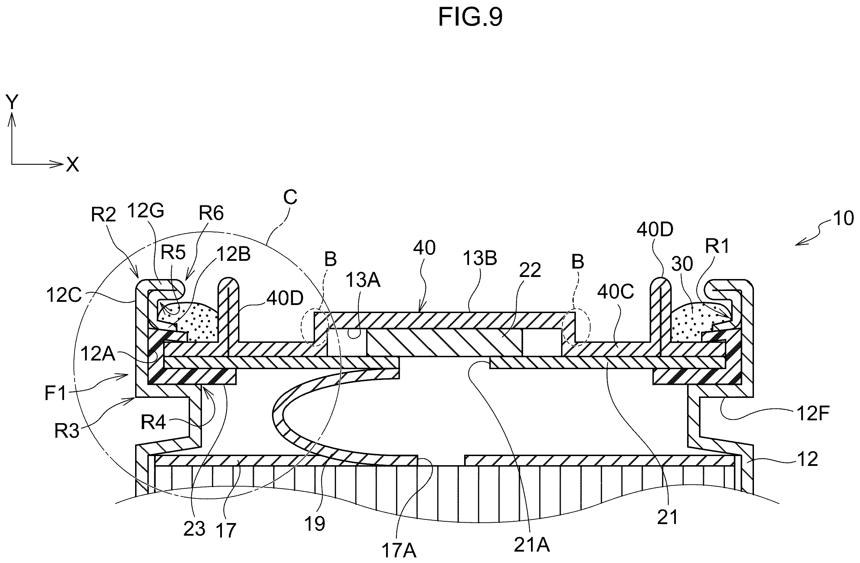

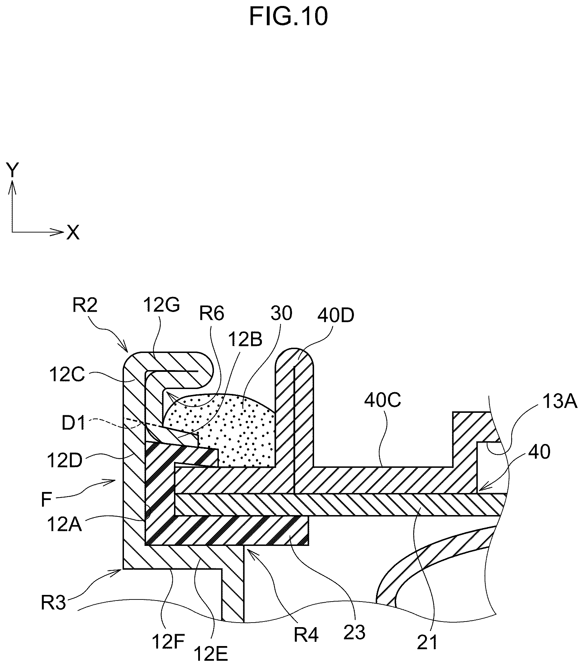

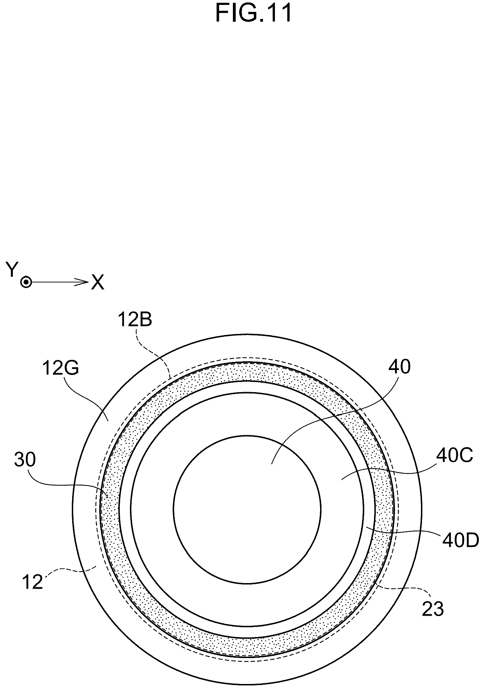

A power storage device 10B of a third exemplary embodiment further includes an upper wall 12G provided to the configuration of the power storage device 10A of the second exemplary embodiment. Fig. 9 is an enlarged cross-section of a power storage device 10B according to a third exemplary embodiment of the present disclosure, corresponding to Fig. 2. Fig. 10 is an enlarged cross-section illustrating an enlargement of inside broken line circle C of the power storage device 10B in Fig. 9, and Fig. 11 is a schematic top view of the power storage device 10B of Fig. 9 as viewed from a lid 40 side. Note that the same reference numerals are appended in Fig. 9 to Fig. 11 to the configuration similar to that of the power storage device 10 of the first exemplary embodiment and the power storage device 10A of the second exemplary embodiment, and explanation thereof will be omitted.

As illustrated in Fig. 9 and Fig. 10, the power storage device 10B includes the upper wall 12G serving as a third partition wall extending toward the radial direction inner side and provided at an end portion of the outer wall 12C at its first side (upper side). In the present exemplary embodiment, for example, the upper wall 12G is formed so as to be substantially parallel to the plane of the lid 40. The upper wall 12G is, for example, configured by the leading end 12B at the first side of the battery case 12 in the an axial direction being bent at a position indicated by arrow R1, and also being bent at a position indicated by arrow R5 further to the second side (trailing side) of the battery case 12 than the position indicated by arrow R1. The battery case 12 is then being bent at positions indicated by arrow R6 and arrow R2 further toward the second side (trailing side) of the battery case 12 than the position indicated by arrow R5 such that the battery case 12 is superimposed on itself.

The battery case 12 is then further bent at a position of arrow R3 further to the second side than the position indicated by arrow R2, and bent at a position of arrow R4 further to the second side than the position indicated by arrow R3, so as to be bent into a shape that surrounds an outer peripheral portion of the lid 40 including a terminal plate 21. In the present exemplary embodiment, an end portion of the upper wall 12G at the first side (upper side) is at substantially the same height as an end portion of the partition wall 40D at the first side (upper side).

In the power storage device 10B of the present exemplary embodiment, a seal member 30 is arranged further to the second side (lower side) than the upper wall 12G formed as described above. Namely, the seal member 30 is arranged between a lower face of the second side (lower side) of the upper wall 12G, the radial direction inner face of the outer wall 12C, and the radial direction outer face of the partition wall 40D. The seal member 30 is arranged further to the second side (lower side) than the end portion of the partition wall 40D at the first side (upper side) and the lower face of the upper wall 12G at the second side (lower side).

As illustrated in Fig. 10 and Fig. 11, the seal member 30 illustrated by the dotted-shading region seals an upper face of the lid 40 further to the radial direction outer side than the partition wall 40D, which is at the outer peripheral portion 40C of the lid 40, seals the gasket 23, and seals a leading end 12B that is positioned further to the radial direction inner side than the outer wall 12C and below the upper wall 12G. Namely, the seal member 30 is arranged such that the portion thereof positioned further to the second side (lower side) than the upper wall 12G is not visible when viewed from above. Note that the seal member 30 is arranged so as to seal at least abutting portions of the leading end 12B and the outer peripheral portion 40C of the lid 40 with the gasket 23 interposed therebetween.

Next, description follows regarding the operation and effects of the power storage device 10B of the third exemplary embodiment.

The power storage device 10B according to the third exemplary embodiment includes the upper wall 12G provided at the end portion of the outer wall 12C at the first side (upper side) and serving as the third partition wall extending toward the radial direction inner side. Therefore, movement of the seal member 30 toward the first side (upper side) may be prevented by the upper wall 12G.

Moreover, in addition to the above, the power storage device 10B according to the third exemplary embodiment is also able to obtain similar effects to those of the power storage device 10A of the second exemplary embodiment.

### Fourth Exemplary Embodiment

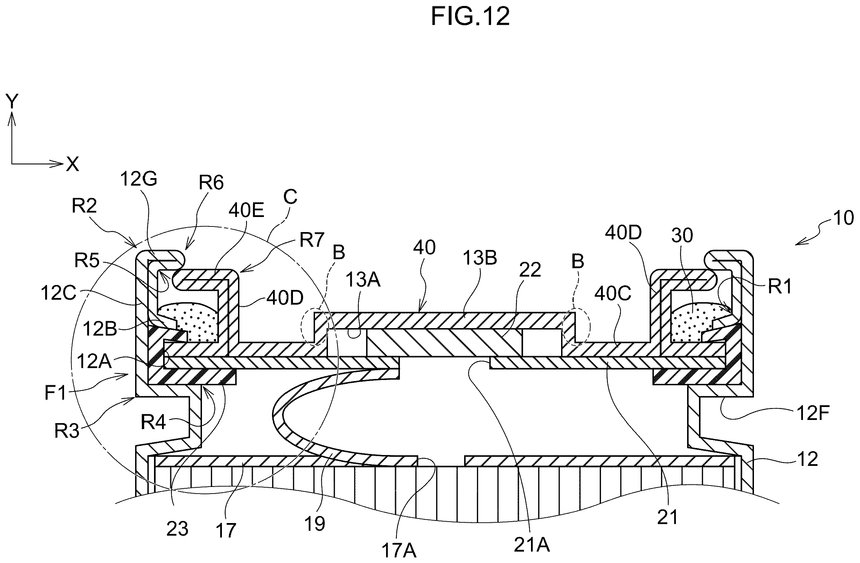

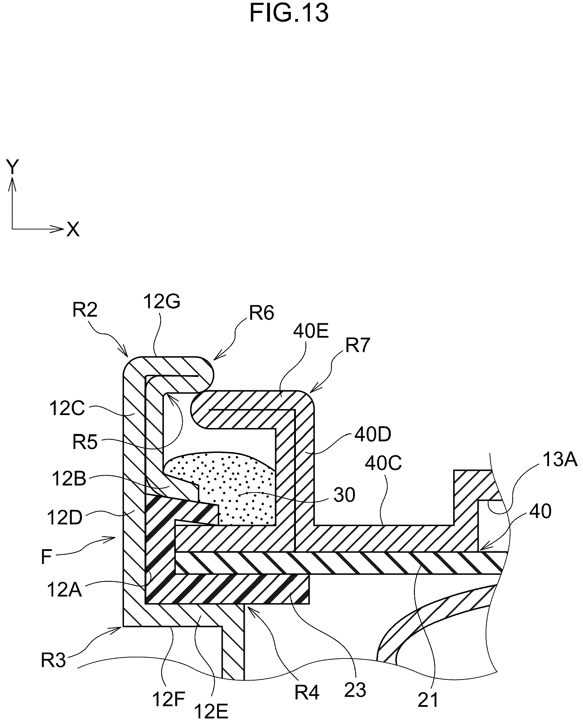

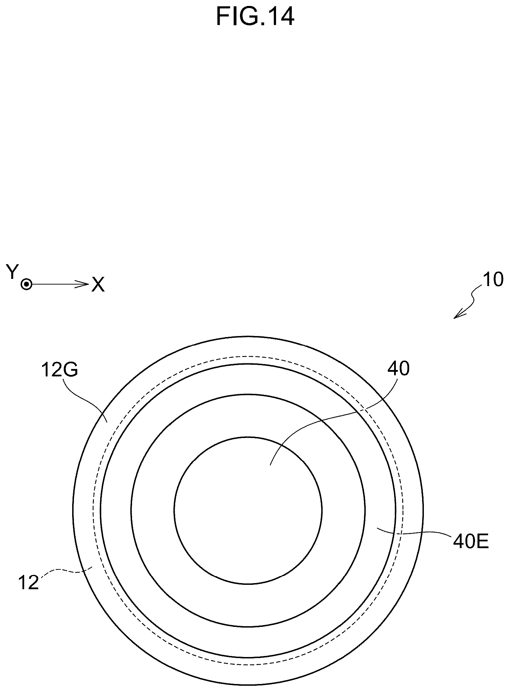

A power storage device 10C of a fourth exemplary embodiment includes a lid 40 further including a lid upper wall 40E provided to the configuration of the power storage device 10B of the third exemplary embodiment. Fig. 12 is an enlarged cross-section of the power storage device 10C according to the fourth exemplary embodiment of the present disclosure, corresponding to Fig. 2. Fig. 13 is an enlarged cross-section illustrating an enlargement of inside broken line circle C of the power storage device 10C of Fig. 12, and Fig. 14 is a schematic top view of the power storage device 10C of Fig. 12 as viewed from a lid 40 side. Note that the same reference numerals are appended in Fig. 12 to Fig. 14 to the configuration similar to that of the power storage devices 10, 10A, 10B of the first to third exemplary embodiments, and explanation thereof will be omitted.

As illustrated in Fig. 12 and Fig. 13, the power storage device 10C includes a lid upper wall 40E serving as a fourth partition wall extending toward the radial direction outer side provided to an end portion of a partition wall 40D of the lid 40 at its first side (upper side). In the present exemplary embodiment, for example, the lid upper wall 40E is formed so as to be substantially parallel to the plane of the lid 40. The lid upper wall 40E is, for example, formed such that the end portion of the partition wall 40D at the first side (upper side) is bent at a position indicated by arrow R7. In the present exemplary embodiment, an end portion of the lid upper wall 40E at the first side (upper side) is formed at a lower height than an end portion of the upper wall 12G at the first side (upper side). In other words, the height positions of the lid upper wall 40E and the upper wall 12G are displaced from each other. Moreover, the lid upper wall 40E and the upper wall 12G are arranged such that portions thereof overlap with each other when viewed along the height direction.

In the power storage device 10C of the present exemplary embodiment, a seal member 30 is disposed further toward the second side (lower side) than the lid upper wall 40E formed as described above. Namely, the seal member 30 is arranged between a lower face of the upper wall 12G at the second side (lower side), the lower face of the lid upper wall 40E at the second side (lower side), the radial direction inner face of the outer wall 12C, and the radial direction outer face of the partition wall 40D. The seal member 30 is disposed further toward the second side (lower side) than lower faces of the lid upper wall 40E and the upper wall 12G at the second side (lower side).

As illustrated in Fig. 13 and Fig. 14, the seal member 30 seals the upper face of the lid 40 at the radial direction outer side of the outer peripheral portion 40C of the lid 40 and at the radial direction outer side of the partition wall 40D, seals the gasket 23, and seals the leading end 12B that is at the radial direction inner side of the outer wall 12C and is positioned below the lid upper wall 40E and the upper wall 12G. Namely, in the power storage device 10C of the present exemplary embodiment, the lid upper wall 40E and the upper wall 12G are arranged so as to partially overlap with each other when viewed from above, such that the seal member 30 positioned further to the second side (lower side) than the lid upper wall 40E and the upper wall 12G is not visible. Note that the seal member 30 is arranged so as to seal at least abutting portions of the leading end 12B and the outer peripheral portion 40C of the lid 40, with the gasket 23 interposed therebetween.

Next, description follows regarding the operation and effects of the power storage device 10C of the fourth exemplary embodiment.

The power storage device 10C according to the fourth exemplary embodiment is provided with the lid upper wall 40E provided at the end portion of the partition wall 40D of the lid 40 at the first side (upper side) and serving as a fourth partition wall extending toward the radial direction outer side Therefore, movement of the seal member 30 toward the safety valve 22 side may be better prevented by the lid upper wall 40E.

Moreover, in the power storage device 10C according to the fourth exemplary embodiment, the height positions of the upper wall 12G and the lid upper wall 40E are displaced in the height direction from each other, with the portions of the upper wall 12G and the lid upper wall 40E overlapping with each other when viewed along the height direction. This enables the seal member 30 to be prevented from outflowing from the first side by the upper wall 12G and the lid upper wall 40E.

Moreover, in addition to the above, the power storage device 10C according to the fourth exemplary embodiment is also able to obtain similar effect to those of the power storage device 10B of the third exemplary embodiment.

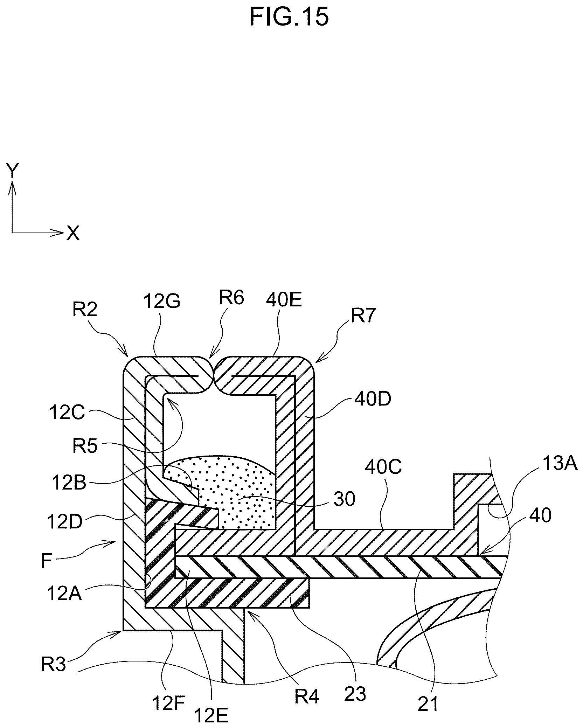

Note that although in the power storage device 10C according to the fourth exemplary embodiment the upper wall 12G and the lid upper wall 40E are positioned displaced in the height direction from each other, and the portions of the upper wall 12G and the lid upper wall 40E overlap with each other when viewed along the height direction, the present disclosure is not limited thereto. Fig. 15 is an enlarged cross-section illustrating a modified example of the power storage device 10C according to the fourth exemplary embodiment, corresponding to Fig. 13. As illustrated in Fig. 15, in the modified example, the positions of the upper wall 12G and the lid upper wall 40E in the height direction are substantially the same, and radial direction end portions thereof, namely, an inner side end portion of the upper wall 12G and an outer side end portion of the lid upper wall 40E, are joined together. Note that known technology using welding, adhesive, or the like may be employed for such joining.

In the above modified example, the end portions of the upper wall 12G and the lid upper wall 40E in the radial direction are joined when viewed along the height direction. Therefore, the seal member 30 can be better prevented from outflowing from the first side by the upper wall 12G and the lid upper wall 40E.

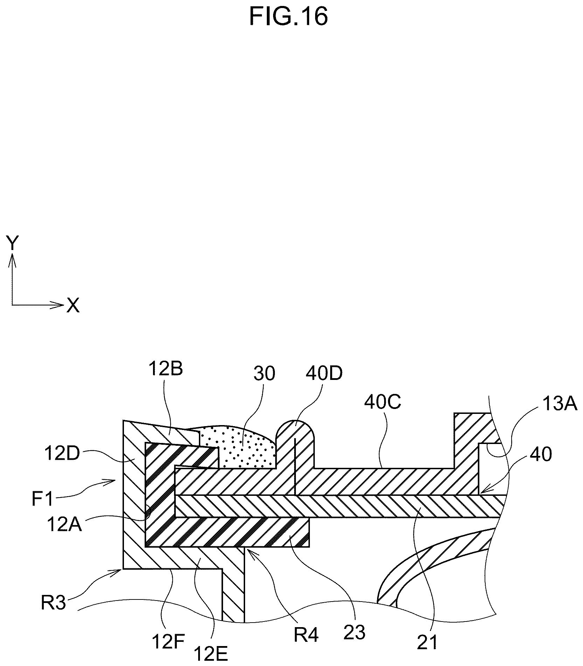

Moreover, although in the power storage devices 10 to 10C according to the first to fourth exemplary embodiments, the battery case 12 includes the outer wall 12C serving as a second partition wall, the present disclosure is not limited thereto, and an outer wall 12C may not necessarily provided. Fig. 16, corresponding to Fig. 7, is an enlarged cross-section of a power storage device lacking an outer wall 12C. As illustrated in Fig. 16, a crimped section F may be obtained by clamping and crimping a leading end 12B and a bottom 12E from above and below using a non-illustrated pressing device. Therefore, when viewed in a direction (X direction) perpendicular to the height direction (axial direction), the upper face of the leading end 12B that is the one-end portion at the radial direction outer side is distal from the lid 13 than the upper face of the leading end 12B that is the one end portion at the radial direction inner side. In other words, in the leading end 12B, the radial direction outer side thereof is positioned further to the first side (upper side) than the radial direction inner side thereof.

In this way, in a configuration not including the outer wall 12C, the seal member 30 is arranged so as to be positioned further toward the second side (lower side) than the end portion (upper end) of the leading end 12B at the radial direction outer side. Specifically, the seal member 30 seals between the radial direction outer side of the outer peripheral portion 40C of the lid 40, the gasket 23, and the leading end 12B. Note that the seal member 30 is arranged so as to seal at least abutting portions of the leading end 12B of the battery case 12 and the outer peripheral portion 40C of the lid 40, with the gasket 23 interposed therebetween.

As described above, due to the upper end of the leading end 12B at the radial direction outer side being positioned above the upper end of the leading end 12B at the radial direction inner side, a drop in the sealing properties of the crimped section F due to movement of the seal member 30 toward the radial direction outside can be prevented from occurring even in a configuration not including an outer wall 12C.

### Supplementary Explanation

Although in the power storage device 10 according to the present exemplary embodiment the lid 13 has a protruding profile including a central section 13B and an outer peripheral portion 13C, for example as illustrated in Fig. 2, the present disclosure is not limited thereto. The lid 13 of the power storage device 10 may have a flat plane profile in which the upper face of the central section 13B and the upper face of the outer peripheral portion 13C are positioned in the same flat plane. Due to being able to provide a recess 13D even with a flat plane profile, the same effects to those of the above exemplary embodiments can still be obtained.

Moreover, although in the power storage devices 10A to 10C according to the second to fourth exemplary embodiments, the lid 40 has a protruding profile including the central section 13B and the outer peripheral portion 40C, for example as illustrated in Fig. 6, the present disclosure is not limited thereto. The lid 40 of the power storage devices 10A to 10C may have a flat plane profile in which the upper face of the central section 13B and the upper face of the outer peripheral portion 40C are positioned in the same flat plane. Due to being able to provide the partition wall 40D even in a flat plane profile, the same effects to those of the second to fourth exemplary embodiments can still be obtained.

Moreover, although in the power storage devices 10B to 10C according to the third and fourth exemplary embodiments, the upper wall 12G and the lid upper wall 40E are arranged substantially parallel to the plane of the lid 40 (the terminal plate 21), the present disclosure is not limited thereto. For example, the upper end faces of the upper wall 12G and the lid upper wall 40E may be inclined with respect to the lid 40.

Moreover, although in the above exemplary embodiments, the outer wall 12C, the partition wall 40D, the upper wall 12G, and the lid upper wall 40E are formed by bending a casing, the present disclosure is not limited thereto, and these may be formed by a method other than bending.

The present disclosure is not limited to the embodiments described above, and various modifications may be implemented within a range not departing from the spirit of the present disclosure. All such modifications are contained in the technical concept of the present disclosure. Moreover, unless explicitly stated otherwise in the specification, each of the configuration elements of the present disclosure are not limited to one thereof, and there may be plural present thereof.

## Claims

1. A power storage device comprising:
a cylinder-shaped casing that houses an electrode assembly inside and has a central axis extending along a first direction;
a safety valve arranged so as to overlap with the central axis when viewed along the first direction;
a lid fixed at the casing by a crimped section crimping the casing from a first side in the first direction of the casing, wherein the lid includes a ring-shaped partition wall extending toward the first side and provided further to a radial direction outer side than the safety valve and further to a radial direction inner side than the crimped section; and
a seal member that seals the crimped section at the radial direction outer side of the partition wall, the seal member being arranged at a second side in the first direction of the casing than an end portion of the casing at the first side.

2. The power storage device of claim 1, wherein:
the lid includes a ring-shaped recess that is arranged separated in a radial direction from the safety valve as viewed along the first direction and that is open at the first side in the first direction ; and
the partition wall is configured by an inner wall at a radial direction inner side of the recess.

3. The power storage device of claim 1 or 2, wherein, when viewed along the direction perpendicular to the first direction, an end portion of the crimped section at a radial direction outer side is distal from the lid than an end portion of the crimped section at a radial direction inner side.

4. The power storage device of claim 3, wherein, when viewed along the direction perpendicular to the first direction, the crimped section is distal from the lid on progression from the end portion at the radial direction inner side toward the end portion at the radial direction outer side.

5. The power storage device of any one of claims 1 to 4, wherein the lid includes a slope inclined in a direction separating away from the casing on progression from a peripheral edge of the lid toward the partition wall in a radial direction.

6. The power storage device of any one of claims 1 to 5, wherein:
the casing includes a ring-shaped second partition wall that extends from the crimped section toward the first side; and
the seal member is arranged further toward the second side than an end portion of the second partition wall at the first side.

7. The power storage device of claim 6, further comprising:
a third partition wall provided at the end portion of the second partition wall at the first side and extending toward the radial direction inner side, wherein
the seal member is arranged further to the second side than the third partition wall.

8. The power storage device of any one of claims 1 to 7, further comprising:
a fourth partition wall provided at the end portion of the partition wall at the first side and extending toward the radial direction outer side, wherein
the seal member is arranged further to the second side than the fourth partition wall.

9. The power storage device of claim 7 or 8, wherein:
the third partition wall and the fourth partition wall are positioned displaced from each other in the first direction, with portions of the third partition wall and the fourth partition wall overlapping with each other when viewed along the first direction.

10. The power storage device of claim 7 or 8, wherein:
the third partition wall and the fourth partition wall are joined together at radial direction end portions thereof when viewed along the first direction.
